# EUROPEAN PATENT SPECIFICATION

(11) **EP 1 019 227 B1**
(45) Date of publication and mention of the grant of the patent: **04.06.2003**
(21) Application number: 97909910.8
(22) Date of filing: 29.09.1997
(51) Int. Cl.: B29B 9/06, B26D 1/38

(54) **POLYMER CUTTING APPARATUS AND METHOD**
SCHNEIDVORRICHTUNG FÜR POLYMERSTRÄNGE UND VERFAHREN DAFÜR.
APPAREIL ET PROCEDE DE COUPE DE POLYMERE

(43) Date of publication of application: 19.07.2000
(73) Proprietor: E.I. DU PONT DE NEMOURS AND COMPANY, Wilmington Delaware 19898 (US)
(72) Inventor: SAMUELS, Michael, Robert, Wilmington, DE 19808 (US); WAGGONER, Marion, Glen, Hockessin, DE 19707 (US)
(74) Representative: Beacham, Annabel Rose
(86) International application number: US9717630
(87) International publication number: WO99016599

(56) References cited:
- EP-A- 0 377 060
- DE-A- 2 538 174
- GB-A- 2 257 084
- US-A- 3 583 267
- US-A- 4 090 674
- PATENT ABSTRACTS OF JAPAN vol. 97, no. 4, 30 April 1997 & JP 08 318532 A (JAPAN CROWN CORK CO. LTD.), 3 December 1996, & DATABASE WPI Section Ch, Week 9707 Derwent Publications Ltd., London, GB; Class AP, AN 97-072510 (07) & JP 08 318 532 A (NIPPON CROWN CORK K.K.) , 3 December 1996
- PATENT ABSTRACTS OF JAPAN vol. 17, no. 576 (M-1499), 20 October 1993 & JP 05 169441 A (SEKISUI PLASTICS CO. LTD.), 9 July 1993, & DATABASE WPI Section Ch, Week 9332 Derwent Publications Ltd., London, GB; Class A, AN 93-252152 (32) & JP 05 169 441 A (SEKISUI PLASTICS CO. LTD.) , 9 July 1993

## Description

### FIELD OF THE INVENTION

This invention concerns a rotary cutting head for cutting polymer, especially polymer strands and the like, and a process for cutting polymer using this head.

### TECHNICAL BACKGROUND

Polymers are abundant and important items of commerce, being useful in a myriad of applications. During handling, processing or reclamation or polymers it is often necessary to cut the polymers into smaller pieces of various sizes and/or configurations. For instance, when thermoplastics are produced they are often cut into pellets or granules of relatively small size so they can be easily fed to a forming machine such as an injection molding machine or an extruder.

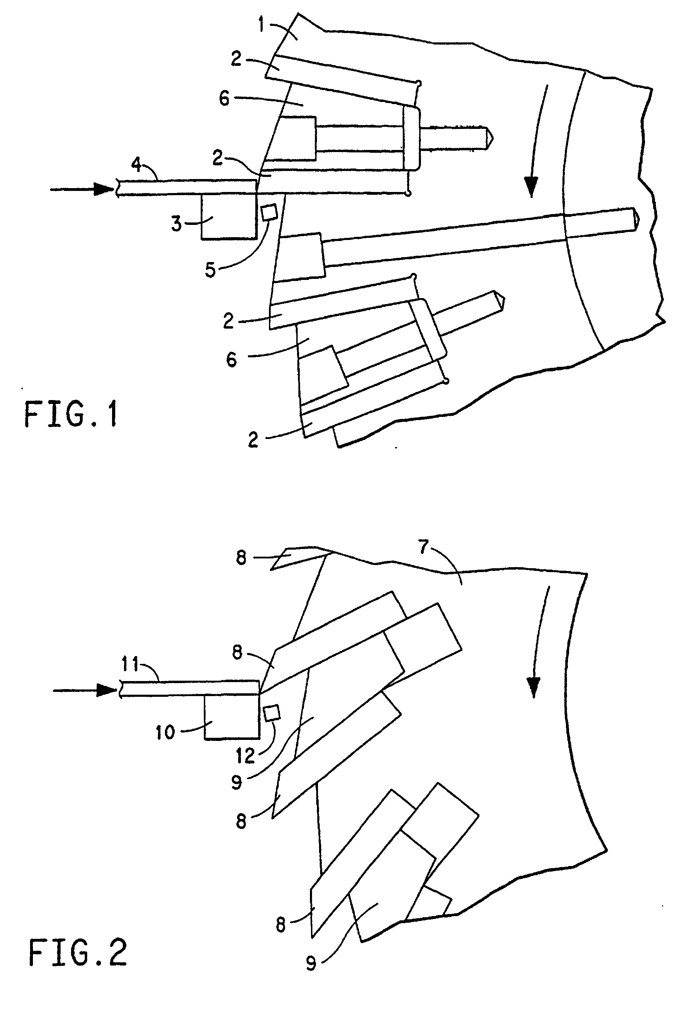

Cutters for polymers are available in many forms. In one common form a rotary head containing knives approximately parallel to the axis of rotation is used to cut polymer against a bed knife as the polymer is being fed into the cuter head. Such a cutter is pictured schematically in Figure 2. In these cutters the knives are such that they cut by a slicing action, with a narrow leading cutting edge slicing through the polymer. While cutters of this type have been popular for many years, they have certain drawbacks. Among these is cutter knife breakage and/or wear, especially when hard and/or abrasive polymers are being cut. It is believed that when knives with sharp acute cutting angles are used, the small amount of metal at the cutting edge makes that edge relatively weak and prone to breakage and/or relatively fast wear. When breakage or excessive wear occurs, the cut quality is adversely affected, and the cutter most be shut down to resharpen or replace the worn or broken blades. This downtime is expensive in both actual maintenance costs and lost production time, and a polymer cutting apparatus requiring less downtime, would be advantageous. Such a cutter is disclosed in JP 08 318532, over which claim 1 is characterized.

This invention provides an apparatus which is a rotary cutter head having an axis of rotation, comprising one or more knifes, each knife having a cutting face and a forward surface intersecting to form a cutting edge on a circumferential periphery of said rotary cutter head, characterised in that the angle between the cutting face and the forward surface forms a cutting edge angle of 70° or more, each knife having a knife angle of -10° to -15° and provided that no point on the cutting face of said knife is further from said axis of rotation of said rotary cutter head than said cutting edge.

Also described herein is a rotary cutter for cutting polymer, comprising, a bed knife, a rotary cutter head as defined above and a means for advancing polymers into said rotary cutter head.

This invention also concerns a process for cutting polymer with a rotary cutter, wherein the improvement comprises, using a rotary cutter head as defined above.

### BRIEF DESCRIPTION OF THE DRAWINGS

Figure 1 shows a cross section perpendicular to the axis of rotation of part of a typical rotary cutting head of this invention, together with a bed knife, a polymer strand and a cut polymer particle.
Figure 2 shows a cross section perpendicular to the axis of rotation of part of a typical rotary cutting head of conventional design, together with a bed knife, a polymer strand and a cut polymer particle.
Figure 3 shows a cross section perpendicular to the axis of rotation of a typical rotary cutter head of this invention.
Figure 4 shows schematically important elements of a rotary cutter head of this invention, as defined herein.
Figure 5 shows the body of the rotary cutter head used in the Example, with dimensions shown in cm. Figure 5a shows a plan view of the body, while Figure 5b shows a cross section of the body perpendicular to the axis of rotation. Figure 5c shows a detailed section of Figure 5b, as indicated.
Figure 6 shows a wedge and a cutter blade used in the rotary cutter head of the Example, with dimensions in cm. Figure 6a is a wedge, both in plan view and cross section, and Figure 6b is a cross section of a cutter blade.

### DETAILS OF THE INVENTTON

By a polymer herein is meant a polymer itself containing no additives, as well as polymers containing any additive or any combination of additives normally found in polymers. Such additives include pigments such as TiO₂, antioxidants, antiozonants, toughening agents, flame retardants, lubricants, dyes, antistatic agents, antistaining agents, and fillers and reinforcing agents such as talc, clay, carbon black, milled glass, glass fiber, carbon fiber, and aramid fiber. Preferred polymers are plastics (as opposed to elastomers), and thermoplastics are especially preferred.

Figure 1 is a general view of a cross section of part of a rotary cutter head, and other parts of a cutting apparatus, according to this invention. The parts of the rotary cutter head shown are **1** the rotary cutter head body which rotates in the direction shown, several knives **2**, and two wedges **6** which hold the knives in place on **1** (as with bolts, whose holes are shown, but the bolts are not shown). Also shown is a stationary bed knife **3** whose mounting is not shown, a polymer strand **4** which is being fed in the direction shown, and a polymer granule **5** which has just been cut.

In contrast Figure 2 shows a similar view of a conventional polymer cutter which has rotary cutter body **7**, several knives **8**, and wedges **9** to hold the knives in place. Also shown are a bed knife **10**, polymer strand **11**, and cut polymer granule **12**.

As can be seen by a general comparison of Figures 1 and 2, the major difference between the instant invention and the conventional cutter is that the conventional cutter acts in a cutting mode, much as a razor blade does in cutting a beard, while the cutter of this invention acts more by shearing off the polymer. In both cutters it is preferred that clearance between the cutting edge of each knife and the bed knife be as small as practicable. This tends to give the cleanest cut, and is usually about 0.025 to about 0.25 mm, preferably about 0.050 to about 0.12 mm.

Generally speaking, in such cutters the polymer is advancing into the rotor knives continuously, so after the cutting edge of each knife passes the bed knife, each cutter knife is raked away from the edge of the bed knife. In other words, the point on the knife furthest away from the axis of rotation of the rotary cutter head is normally the cutting edge of the knife, and all points on the cutting edge face are closer to the axis of rotation of the rotary cutter head than the cutting edge. Furthermore, if applicable, the rotary cutter head or its parts other than the knives are also preferably designed to allow the polymer to advance. In the case of Figure 1, the rotor body and wedges are rated away from the periphery of the cutter head as shown. Other designs will be obvious to the artisan to accomplish this.

The knives may be separate parts which can be removed from the rotary cutter head for sharpening or replacement, or other configurations are possible, which can be held in the rotary cutter head by bolts, or as shown by wedges. Or the rotary cutter head may be a single piece of metal, with the knife edges hardened. This eliminates much machining of wedges, holes, etc., which are shown in Figure 1. This is particularly useful where the knife edges don't chip or need sharpening very often.

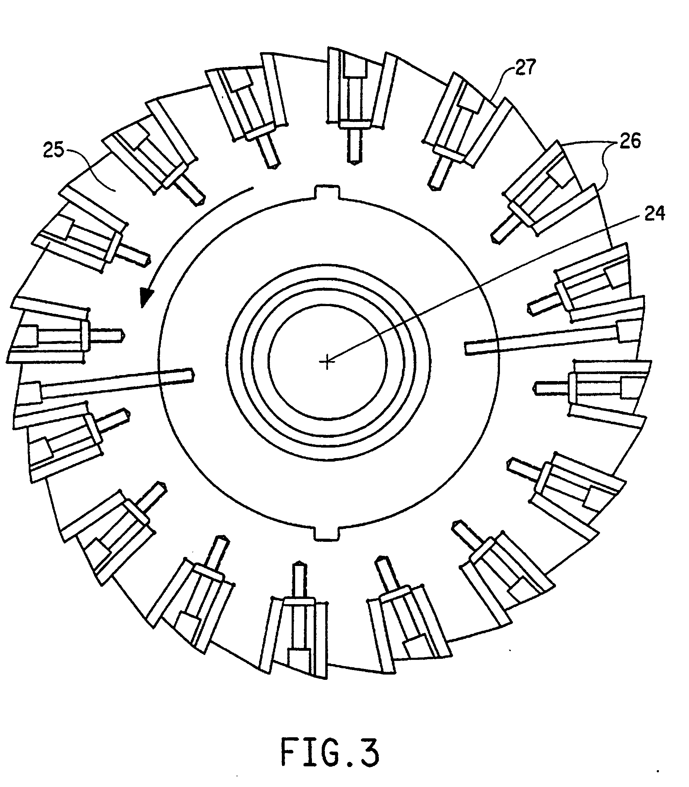

Figure 3 shows a cross section perpendicular to the axis of rotation of a full rotary cutter head according to this invention. This head has a center of rotation **24**, a body **25**, a multiplicity of knives **26**, held to the body with a multiplicity of wedges **27**. In operation the head rotates in the direction shown.

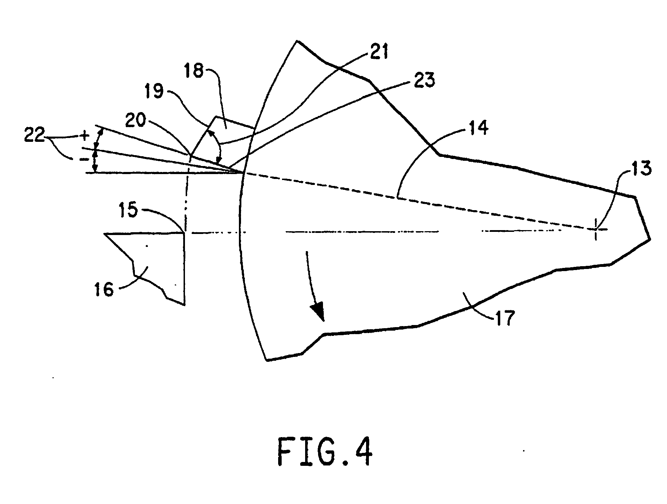

Figure 4 is a schematic diagram showing important elements of the rotary cutter head of this invention and their relationship to each other. Also included for completeness is abed knife. The rotary head cutter of Figure 4 has an axis of rotation **13**. For convenience in explanation a dashed line **14** (which is in fact a radius) has been drawn from **13** to the point at which a knife, **18** protrudes from **17**, the cutter body. Also included in Figure 4 is a bed knife **16** having cutting edge **15**. Protruding from the body **17** of the rotary cutter head is knife **18** (of course more than one knife may be present), which has knife cutting face **19**, and cutting edge **20**. In addition the knife also has cutting edge angle **21**, a knife forward surface **23**, and knife angle **22**, **22** is measured from a radius such as **14** extended through the point at which **18** protrudes from **17**. Positive and negative angles of **22** are indicated on Figure 3.

Normally the position of **16** and **17** will be such that **15** will be approximately parallel to **13**, and this position also will preferably minimize the clearance between **15** and **20** when the rotary cutter head is in operation.

The cutting edge angle of the knife, **21**, is at least 70° or more, preferably about 80° or more. This angle is the angle between the knife cutting face **19** and the knife forward surface **23**. If one or both of **19** and **23** is (are) curved, then **21** is taken as the angle between the tangent and the other arm of the angle or between the two tangents, (on one or both of **19** and **23**) at **20**. The maximum value of **21** is determined by **22** and the requirement that no part of **19** be further from **13** than **20**. Since **21** is a relatively large angle, there is a considerable amount of metal (or other knife material) around, and especially in back of, **20**. It is believed that this material near the cutting edge makes **20** stronger, and thus less prone to chip. The massive amount of material about **20** also is believed to retard wear, thus reducing the frequency at which **20** must be resharpened.

In addition, **22** is the angle between a radius from **13**, and **23** (or a tangent to **23** at **20** if **23** is a curved surface), and is about +10° to about -15°, preferably about 0° to about -5°, and especially preferably about 0°. If **22** is too positive, the shearing action of **20** against **15** may be unpaired, therefore leading to poorly cut polymer, and if **22** is too negative, it may not be possible to make **21** large enough.

No point on **19** should be further away from **13** than **20**. This follows simply from the fact that one normally prefers to have **20** as close to **15** as is practicably while polymer is being cut. If any part of **19** is further from **13** than **20**, one simply will not be able to place **20** as close to **15** as is preferred, without having **19** strike **15** when **17** is rotating. Of course as **20** suffers some wear from cutting polymer, a small portion of **19** immediately adjacent to **20** may be further from **13** than the actual edge of **20**. This is permissible, but of course when **20** becomes badly worn it will preferably be sharpened to maintain a good polymer cut quality.

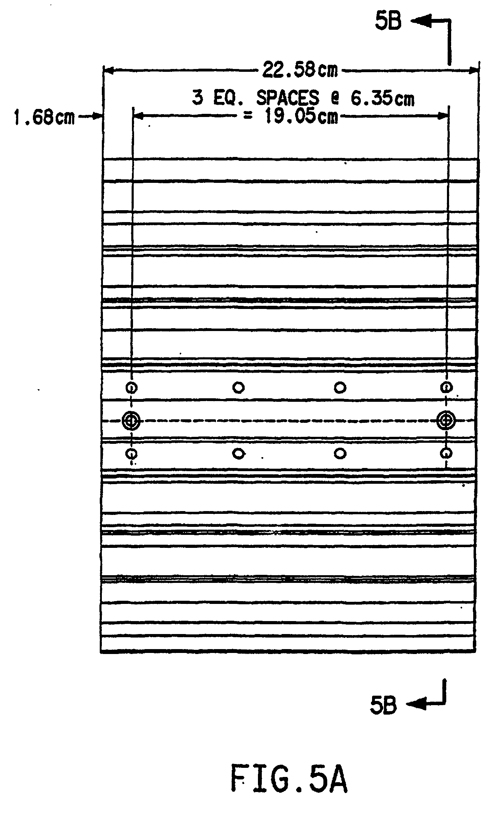

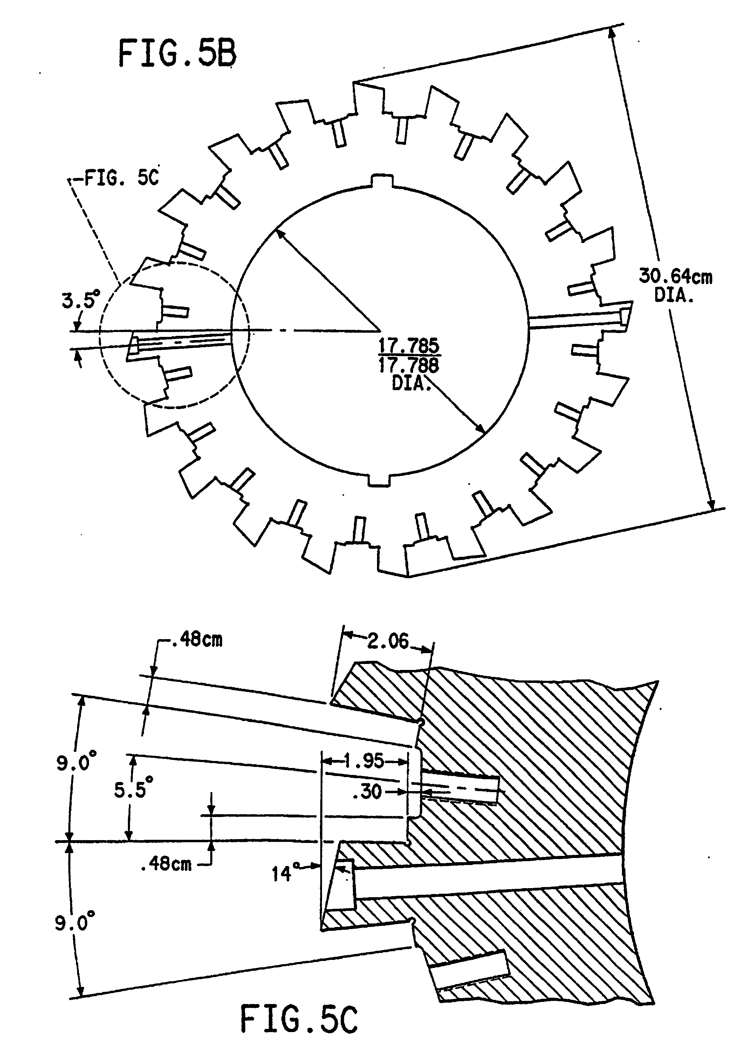

It is preferred, although not necessary, that some, and more preferably all, of the knives **18** run the full length of **17**. This is shown in Figure 5.

Across the length of **17** (perpendicular to the cross section shown in Figure 3), **20** may be parallel to **13**, or may be helically disposed to **13**, with essentially the entire length of **20** being at a constant distance from **13**. A preferred helical angle is about 0° to about 3° from **13**. When **17** is quite long, and for instance may be cutting many strands of polymer, the overall strain on any knife is lessened if that knife contacts the polymer strands in sequence, as it would do if the blade was helically disposed about **13**.

This invention also includes an apparatus for cutting polymers which includes the rotary cutter head described above, a bed knife, and a means for advancing polymer into the rotary tatter head. The bed knife is a usually stationary item that is placed so that clearance between the knives of the rotary cutter head **18** pass as close to the bed knife as reasonably possible while the rotary cutter head is rotating. The "knife edge" of the bed knife will usually have an angle of about 90°, and serves to keep the polymer from bending or otherwise moving as the knives **18** strike the polymer. Most commonly, the polymer is fed over a surface of the bed knife into the rotary cutter head, as shown in Figures 1 and 2.

The polymer **4** or **11** is usually advanced continuously as shown in Figures 1 and 2, respectively, into the path of the knives 2 or 8 of the rotary cutter head. This requires a means for advancing the polymer. If the cotter apparatus is so disposed the polymer may "fall" into the rotary cutter head by gravity. More commonly though the polymer is fed by means of one or more pairs of feed rolls or a pair of feed conveyors. By feed rolls is meant a pair of rolls having a nip between them. Polymer is fed into the nip and the rolls are driven to move the polymer through the nip and into the rotary cutter head. A feed conveyor is similar, being a conveyor-like apparatus with two conveyor belts with the polymer being driven between the belts. The polymer may simply be fed by being extruded from a die, the movement though and out of the die being the feed mechanism to the rotary cutter head. Other methods of feeding are known.

Inherent in the above discussion is a description of a process for cutting polymer using the rotary cutter head described herein. Many different shapes of polymer may be cut, such as sheets, strands, ribbons and tubes, especially thick-walled tubes. If the polymer to be cut is too thin, such as a small diameter fiber or a thin film the polymer may bend and may or may not be cut, but even if cut the cut may not be of good quality, i.e., be ragged, generate fines (smaller particles than desired) or cut only partially or unevenly. It is preferred that the smallest cross sectional dimension of the polymer to be cut is about 1 mm or more, preferably about 2 mm or more. The maximum dimension will depend on the polymer being cut as well as the power of the power of the cutter apparatus and the mechanical stress the cutting apparatus can endure.

One preferred four to be cut is one or more polymer strands. By a strand is meant a rod-like essentially continuous length of polymer whose largest cross sectional dimension is no more than 6 times, preferably no more than 3 times, and more preferably no more than 2 times greater than its smallest cross sectional dimension. A preferred cross sectional for a strand is approximately circular or square, with circular being especially preferred. It is preferred that the largest cross sectional dimension of the strand be about 1 to about 8 mm, preferably about 2 mm to about 4 mm. Cutting of strands into relatively short pieces, about 1 to about 8 mm long, or expressed another way the length to diameter ratio of the pellet is about 1, gives an especially useful form of polymer usually called pellets or granules. This is the most common form of solid polymer which is fed to injection molding machines, extruders, and the like.

### EXAMPLE

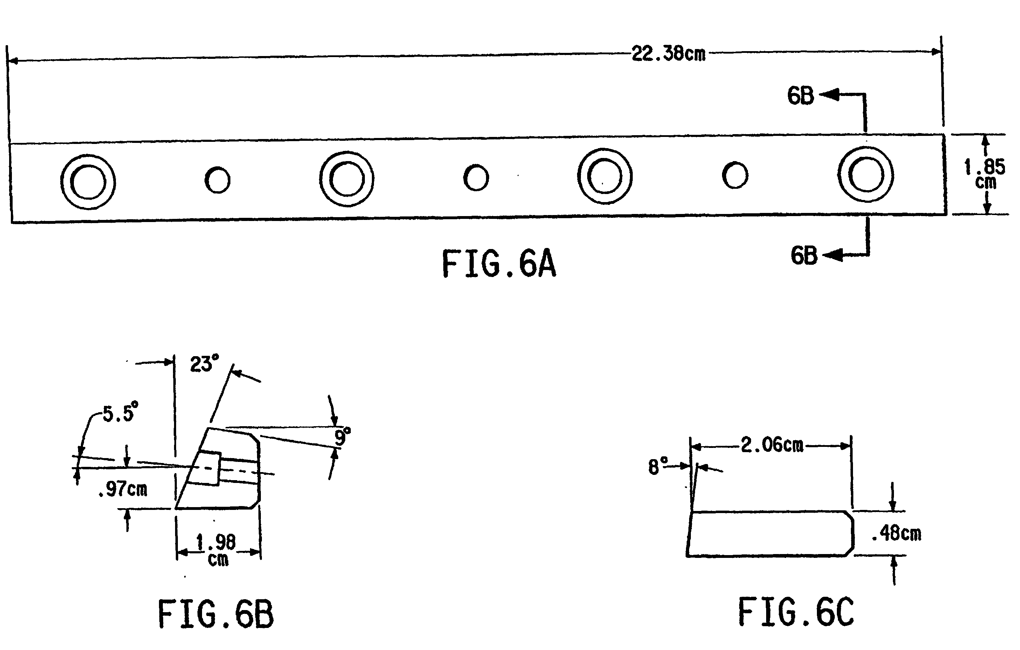

A Model 3508 cutter made by Conair Corp., Bay City, MI, U.S.A. was used to cut circular cross section polymer strands. The cutter head was used is shown in Figures 5 and 6. The diameter of the strands entering the cutter was about 2.3 mm, and the length of the pellet produced was about 2.5 mm. The strands were extruded through die holes about 4.0 to 4.5 mm in diameter and the strands (while molten) were drawn down to about 2.3 mm diameter by the feed mechanism of the cutter. The clearance between the rotor knives and the bed knife was nominally 0.076 mm.

During routine operation, an average of about 545 kg/h of pellets were produced, with the range being about 455 to about 635 kg/h. This entailed feeding 10 to 20 polymer strands at a linear rate of about 60 to about 90 m/min. The maximum rotor speed was 1800 rpm, which was adjusted to produce pellets as described above.

Over a period of about 4 months (about 1,005 actual operating hours) a total of about 450,000 kg of polymer was processed through the cutter as described above. All of this polymer was glass fiber filled, the glass fiber contents ranging from 13 to 45 percent by weight. Smaller amounts of other materials such as carbon black were also present in some of the polymer.

The individual polymers cut at different times were poly(ethylene terephthalate), poly(butylene terephthalate), nylon-6,6 and apolyamide containing both aromatic and aliphatic repeat units. All of these polymers gave a good cut throughout the test, with for instance the amount of fines being produced at the beginning and end of the test on various polymers not differing much. The results were also comparable to those which were usually obtained with the same cutter using a conventional type rotary cutter head, as shown in Figure 2.

Wear on the knife edges at the end of mis test was measured as 0.032 mm. It is difficult to compare this wear to the wear on knife edges from a conventional cutter because of the varying geometry of the knife edge, and the effect of such wear may have on cut quality.

## Claims

1. An apparatus which is a rotary cutter head (1) having an axis of rotation (13), comprising one or more knifes (2, 18), each knife having a cutting face (19) and a forward surface (23) intersecting to form a cutting edge (20) on a circumferential periphery of said rotary cutter head (1), wherein
each knife has a knife angle (22) of +10° to -15°, and provided that no point on the cutting face (19) of said knife (2, 18) is further from said axis of rotation (13) of said rotary cutter head (1) than said cutting edge; **characterized in that**
the angle between the cutting face (19) and the forward surface (23) is a cutting edge angle (21) of 70° or more.

2. An apparatus for cutting polymer (4), further comprising a bed knife (3, 16), a rotary cutter head (1) apparatus as claimed in claim 1, and a means for advancing polymer into said rotary cutter head.

3. The apparatus as recited in claim 1 or 2, wherein said cutting edge angle (21) is 80° or more.

4. The apparatus as recited in claim 1 or 2, wherein said knife angle (22) is 0° to -5°.

5. The apparatus as recited in claim 2 wherein a distance between said cutting edge (20) and said bed knife (3, 16) is 0.025 mm to 0.25 mm.

6. The apparatus or process as recited in any preceding claim, wherein a helical angle between said axis of rotation (13) and said cutting edge (20) is 0° to 3°.

7. A process for cutting polymer (4) with a rotary cutter, wherein the improvement comprises, using a rotary cutter head (1) as claimed in claim 1 or in any of claims 3 to 6 when dependent thereon.

8. The process as recited in claim 7 wherein a distance between said cutting edge (20) and a bed knife (3, 16) is 0.025 mm to 0.25 mm.

9. The process as recited in claim 7 or 8 wherein said polymer is a thermoplastic.

10. The process as recited in claim 9 wherein said polymer is originally in the form of a strand.

11. The process as recited in claim 9 or 10 wherein said polymer (4) is continuously fed to said rotary cutter head (1).

12. The process as recited in claim 10 wherein a minimum cross sectional dimension of said strand is 2 mm.

13. The process as recited in claim 10 or 12 wherein said strand has a circular or square cross section.

14. The process as recited in any of claims 8 to 13 wherein said polymer (4) contains at least one filler or reinforcing agent.

15. The process as recited in any of claims 8 to 14 wherein pellets or granules (12) of said polymer are produced.

## Patentansprüche

1. Vorrichtung, die ein rotierender Schneidkopf (1) mit einer Drehungsachse (13) ist, die ein oder mehrere Messer (2, 18) aufweist, wobei jedes Messer eine Schneidfläche (19) und eine vordere Fläche (23) aufweist, die sich schneiden, um eine Schneidkante (20) auf einem Umfang des rotierenden Schneidkopfes (1) zu bilden, worin
jedes Messer einen Messerwinkel (22) von +10° bis -15° aufweist und vorausgesetzt, daß kein Punkt auf der Schneidfläche (19) des Messers (2, 18) weiter von der Drehungsachse (13) des rotierenden Schneidkopfes (1) entfernt ist als die Schneidkante; **dadurch gekennzeichnet, daß**
der Winkel zwischen der Schneidfläche (19) und der vorderen Fläche (23) ein Schneidkantenwinkel (21) von 70° oder mehr ist.

2. Vorrichtung für das Schneiden eines Polymers (4), die außerdem aufweist: ein Statormesser (3, 16); eine rotierende Schneidkopfvorrichtung (1) nach Anspruch 1; und eine Einrichtung für das Transportieren des Polymers in den rotierenden Schneidkopf.

3. Vorrichtung nach Anspruch 1 oder 2, bei der der Schneidkantenwinkel (21) 80° oder mehr beträgt.

4. Vorrichtung nach Anspruch 1 oder 2, bei der der Messerwinkel (22) 0° bis -5° beträgt.

5. Vorrichtung nach Anspruch 2, bei der ein Abstand zwischen der Schneidkante (20) und dem Statormesser (3, 16) 0,025 mm bis 0,25 mm beträgt.

6. Vorrichtung oder Verfahren nach vorhergehenden Ansprüchen, bei der ein Spiralwinkel zwischen der Drehungsachse (13) und der Schneidkante (20) 0° bis 3° beträgt.

7. Verfahren zum Schneiden eines Polymers (4) mit einer rotierenden Schneidvorrichtung, bei dem die Verbesserung die Verwendung eines rotierenden Schneidkopfes (1) nach Anspruch 1 oder einem der Ansprüche 3 bis 6, wenn sie davon abhängig sind, aufweist

8. Verfahren nach Anspruch 7, bei dem ein Abstand zwischen der Schneidkante (20) und einem Statormesser (3, 16) 0,025 mm bis 0,25 mm beträgt.

9. Verfahren nach Anspruch 7 oder 8, bei dem das Polymer ein Thermoplast ist.

10. Verfahren nach Anspruch 9, bei dem das Polymer ursprünglich in der Form eines Stranges vorliegt.

11. Verfahren nach Anspruch 9 oder 10, bei dem das Polymer (4) dem rotierenden Schneidkopf (1) kontinuierlich zugeführt wird.

12. Verfahren nach Anspruch 10, bei dem eine minimale Querschnittabmessung des Stranges 2 mm beträgt.

13. Verfahren nach Anspruch 10 oder 12, bei dem der Strang einen kreisförmigen oder quadratischen Querschnitt aufweist.

14. Verfahren nach einem der Ansprüche 8 bis 13, bei dem das Polymer (4) mindestens einen Füllstoff oder ein Verstärkungsmittel enthält.

15. Verfahren nach einem der Ansprüche 8 bis 14, bei dem Pellets oder Körnchen (12) des Polymers hergestellt werden.

## Revendications

1. Appareil consistant en une tête de coupe rotative (1) pourvue d'un axe de rotation (13), comprenant un ou plusieurs couteau(x) (2, 18), chaque couteau possédant une face coupante (19) et une surface avant (23) qui se coupent pour former une arête de coupe (20) sur une périphérie circonférentielle de ladite tête de coupe rotative (1), dans lequel
chaque couteau présente un angle de couteau (22) compris entre +10° et -15°, et à condition qu'aucun point de la face coupante (19) dudit couteau (2, 18) ne soit plus éloigné dudit axe de rotation (13) de ladite tête de coupe rotative (1) que ladite arête de coupe; **caractérisé par le fait que**
l'angle entre la face coupante (19) et la surface avant (23) est un angle d'arête de coupe (21) supérieur ou égal à 70°.

2. Appareil pour couper un polymère (4), comprenant, en outre, un couteau fixe (3, 16), appareil consistant en une tête de coupe rotative (1) selon la revendication 1 et moyen pour faire avancer le polymère dans ladite tête de coupe rotative.

3. Appareil selon la revendication 1 ou 2, dans lequel ledit angle d'arête de coupe (21) est supérieur ou égal à 80°.

4. Appareil selon la revendication 1 ou 2, dans lequel ledit angle de couteau (22) est compris entre 0° et -5°.

5. Appareil selon la revendication 2, dans lequel une distance entre ladite arête de coupe (20) et ledit couteau fixe (3 , 16) est comprise entre 0,025 mm et 0,25 mm.

6. Appareil ou procédé selon l'une quelconque des revendications précédentes, dans lequel un angle hélicoïdal entre ledit axe de rotation (13) et ladite arête de coupe (20) est compris entre 0° et 3°.

7. Procédé pour couper un polymère (4) avec une coupeuse rotative, dans lequel l'amélioration comprend l'utilisation d'une tête de coupe rotative (1) selon la revendication 1 ou l'une quelconque des revendications 3 à 6 lorsqu'elles dépendent de celle-ci.

8. Procédé selon la revendication 7, dans lequel une distance entre ladite arête de coupe (20) et un couteau fixe (3 , 16) est comprise entre 0,025 mm et 0,25 mm.

9. Procédé selon la revendication 7 ou 8, dans lequel ledit polymère est un thermoplastique.

10. Procédé selon la revendication 9, dans lequel ledit polymère se présente à l'origine sous la forme d'un fil de base.

11. Procédé selon la revendication 9 ou 10, dans lequel ledit polymère (4) est alimenté de manière continue vers ladite tête de coupe rotative (1).

12. Procédé selon la revendication 10, dans lequel une dimension minimale de la section transversale dudit fil de base est 2 mm.

13. Procédé selon la revendication 10 ou 12, dans lequel ledit fil de base a une section transversale circulaire ou carrée.

14. Procédé selon l'une quelconque des revendications 8 à 13, dans lequel ledit polymère (4) contient au moins une matière de remplissage ou un agent de renforcement.

15. Procédé selon l'une quelconque des revendications 8 à 14, dans lequel on produit des pastilles ou des granules (12) dudit polymère.
